# EUROPÄISCHE PATENTANMELDUNG

(11) **EP 4 344 598 A1**
(43) Veröffentlichungstag der Anmeldung: **03.04.2024**
(21) Anmeldenummer: 23198338.8
(22) Anmeldetag: 19.09.2023
(51) Int. Cl.: A47L 15/24, A47L 15/42

(54) **TRANSPORTSPÜLMASCHINE SOWIE VERFAHREN ZUM BETREIBEN EINER TRANSPORTSPÜLMASCHINE**

(30) Priorität: 28.09.2022 DE 102022124968
(71) Anmelder: Illinois Tool Works Inc., Glenview, IL 60025 (US)
(72) Erfinder: DISCH, Harald, Glenview, IL 60025 (US); SCHREMPP, Martin, Glenview, IL 60025 (US)
(74) Vertreter: Meissner Bolte Partnerschaft mbB

(57) **Zusammenfassung**

Die Erfindung betrifft eine Transportspülmaschine (1) zum Reinigen von Spülgut, wobei die Transportspülmaschine (1) mindestens eine Waschzone (6, 7, 8, 9) und mindestens eine Klarspülzone (10) sowie eine Transportvorrichtung (2) aufweist zum Transportieren von Spülgut durch die mindestens eine Waschzone (6, 7, 8, 9) und die mindestens eine Klarspülzone (10). Erfindungsgemäß ist insbesondere vorgesehen, dass die Transportspülmaschine (1) ein Kamerasystem (34) aufweist, welches ober- oder unterhalb der oder seitlich zur Transportvorrichtung (2) angeordnet und ausgebildet ist, vorzugsweise kontinuierlich oder zu vorab festgelegten oder festlegbaren Zeiten und/oder Ereignissen mindestens ein Bild von einem Bereich der Transportvorrichtung (2) aufzunehmen, wobei dem Kamerasystem (34) eine Bildverarbeitungseinrichtung (35) zugeordnet ist, welche ausgebildet ist, eine Position, Lage und/oder Ausrichtung von in dem mindestens einen aufgenommenen Bild enthaltenen Spülgutteilen zu ermitteln, wobei ferner eine Auswerteeinrichtung vorgesehen ist, welche ausgebildet ist, anhand der ermittelten Position, Lage und/oder Ausrichtung der Spülgutteile auszuwerten und zu ermitteln, ob zum Zeitpunkt der Bildaufnahme in dem Bereich der Transportvorrichtung (2) Spülgutteile vorhanden sind, die:
i) falsch orientiert von der Transportvorrichtung (2) transportiert werden; und/oder
ii) falsch ausgerichtet von der Transportvorrichtung (2) transportiert werden.

## Beschreibung

Die vorliegende Erfindung betrifft allgemein das Fachgebiet des gewerblichen Spülens und insbesondere eine Transportspülmaschine nach dem Oberbegriff des unabhängigen Patentanspruchs 1 sowie ein entsprechendes Verfahren zum Betreiben insbesondere einer solchen Transportspülmaschine.

Demgemäß betrifft die Erfindung insbesondere eine Transportspülmaschine zum Reinigen von Spülgut, wobei die Transportspülmaschine mindestens eine Waschzone und mindestens eine Klarspülzone sowie eine Transportvorrichtung aufweist zum Transportieren von Spülgut durch die mindestens eine Waschzone und die mindestens eine Klarspülzone.

Die erfindungsgemäße Transportspülmaschine kann insbesondere als Bandtransportspülmaschine oder als Korbtransportspülmaschine ausgeführt sein.

Transportspülmaschinen finden im gewerblichen Bereich Anwendung. Im Unterschied zu Haushaltsspülmaschinen, bei welchen das zu reinigende Spülgut während der Reinigung ortsfest in der Maschine verbleibt, findet bei Transportspülmaschinen ein Transport des Spülguts durch verschiedene Behandlungszonen der Transportspülmaschine statt.

Bei Transportspülmaschinen wird das Spülgut, wie beispielsweise Geschirr, Töpfe, Gläser, Besteck und andere zu reinigende Utensilien, durch mehrere Behandlungszonen, wie zum Beispiel mindestens eine Vorwaschzone, mindestens eine Hauptwaschzone, mindestens eine Nachwasch- bzw. Vorspülzone, mindestens eine Frischwasser-Klarspülzone und mindestens eine Trocknungszone, gefördert. Unterschiedliche Spülgutarten allerdings verlangen aufgrund ihrer Gebrauchsanwendung, ihres Verschmutzungsgrads, ihrer Form, sowie aufgrund des eingesetzten Materials unterschiedliche Behandlungsparameter für die einzelnen Prozessschritte. Bei heutigen Transportspülmaschinen wird jedoch in der Regel keine automatische Differenzierung der Spülgutarten vorgenommen, so dass die herkömmlichen Systeme oftmals als Kompromiss so ausgelegt sind, dass sie für mehrere unterschiedliche Spülgutarten verwendbar sind.

Insbesondere sind herkömmliche Transportspülmaschinen derart konzipiert, dass diese von zu reinigendem Spülgut ausgehend, welches derart von der Transportvorrichtung der Transportspülmaschine aufgenommen ist, dass die einzelnen Spülgutteile optimal im Hinblick auf die Wasch- und Spülsysteme der Behandlungszonen der Transportspülmaschine ausgerichtet sind. Bei der Auslegung von herkömmlichen Transportspülmaschinen wird insbesondere in einer unrealistischen Weise davon ausgegangen, dass die einzelnen von der Transportvorrichtung der Transportspülmaschine aufgenommenen Spülgutteile untereinander keine Sprühschatten bilden, die eine Behandlung der einzelnen Spülgutteile in den Behandlungszonen erschweren oder gar nicht möglich machen. Vielmehr wird bei der Auslegung vor herkömmlichen Transportspülmaschinen in der Regel davon ausgegangen, dass das von der Transportvorrichtung aufgenommene und zu reinigende Spülgut optimal orientiert und ausgerichtet ist, so dass die Wasch- und Spülsysteme der Behandlungszonen der Transportspülmaschine anschließend die Spülgutteile entsprechend behandeln können.

Im praktischen Gebrauch ist jedoch eine solche optimal orientierte und optimal ausgerichtete Aufnahme der zu reinigenden Spülgutteile auf die Transportvorrichtung nicht realisierbar, da das der Transportspülmaschine zugeordnete Spülpersonal häufig unter hohem Zeitdruck das anfallende Spülgut in die Transportspülmaschine eingeben muss, in Folge dessen es in der Regel nicht möglich ist, sicherzustellen, dass das eingegebene Spülgut stets optimal orientiert und ausgerichtet ist.

Dies führt dazu, dass das Spül- und Waschergebnis der Transportspülmaschine trotz angepasster Behandlungsparameter unter Umständen nicht zufriedenstellend ist. Wenn beispielsweise ein Spülgutteil, wie beispielsweise ein Becher oder ein Behälter, wie beispielsweise eine Pfanne, falsch herum auf die Transportvorrichtung der Transportspülmaschine gesetzt ist, ist es bei der Behandlung dieses Spülgutteils in den Behandlungszonen der Transportspülmaschine nicht möglich, dass die mit den Spül- und Waschsystemen versprühte Reinigungsflüssigkeit (Waschflüssigkeit und Klarspülflüssigkeit) die am stärksten verschmutzten Bereiche des Spülgutteils optimal abdeckt. Eine Unterbehandlung der Spülgutteile ist somit vorprogrammiert.

Auf Grundlage dieser Problemstellung liegt der Erfindung die Aufgabe zu Grunde, eine Transportspülmaschine der eingangs genannten Art dahingehend weiterzubilden, dass in einer effektiven Weise das Spül- und Waschergebnis der Transportspülmaschine bei gleichzeitiger Reduzierung der eingesetzten Ressourcen (Wasser, Energie und Chemikalien) optimiert ist. Des Weiteren soll ein entsprechendes Verfahren zum Betreiben einer solchen Transportspülmaschine angegeben werden.

Im Hinblick auf die Transportspülmaschine wird die der Erfindung zu Grunde liegende Aufgabe durch den Gegenstand des unabhängigen Patentanspruchs 1 gelöst, wobei vorteilhafte Weiterbildungen der erfindungsgemäßen Transportspülmaschine insbesondere in den abhängigen Patentansprüchen 2 bis 9 angegeben sind.

Im Hinblick auf das Verfahren wird die der Erfindung zu Grunde liegende Aufgabe insbesondere durch den Gegenstand des nebengeordneten Patentanspruchs 10 gelöst, wobei vorteilhafte Weiterbildungen des erfindungsgemäßen Betriebsverfahrens in den abhängigen Ansprüchen 11 bis 13 angegeben sind.

Demgemäß betrifft die vorliegende Erfindung insbesondere eine Transportspülmaschine zum Reinigen von Spülgut, wobei die Transportspülmaschine mindestens eine Waschzone und mindestens eine Klarspülzone sowie eine Transportvorrichtung aufweist zum Transportieren von Spülgut durch die mindestens eine Waschzone und die mindestens eine Klarspülzone.

Erfindungsgemäß ist insbesondere vorgesehen, dass die Transportspülmaschine ein Kamerasystem aufweist, welches ober- oder unterhalb der oder seitlich zur Transportvorrichtung angeordnet und ausgebildet ist, vorzugsweise kontinuierlich oder zu vorab festgelegten oder festlegbaren Zeiten und/oder Ereignissen mindestens ein Bild von einem Bereich der Transportvorrichtung aufzunehmen.

Insbesondere ist bei der erfindungsgemäßen Lösung vorgesehen, dass dem Kamerasystem eine Bildverarbeitungseinrichtung zugeordnet ist, welche ausgebildet ist, eine Position, Lage und/oder Ausrichtung von in dem mindestens einen aufgenommenen Bild enthaltenen Spülgutteilen zu ermitteln. Ferner kommt eine Auswerteeinrichtung zum Einsatz, welche ausgebildet ist, anhand der ermittelten Position, Lage und/oder Ausrichtung der Spülgutteile auszuwerten und zu ermitteln, ob zum Zeitpunkt der Bildaufnahme in dem Bereich der Transportvorrichtung Spülgutteile vorhanden sind, die:
i) falsch orientiert von der Transportvorrichtung transportiert werden; und/oder
ii) falsch ausgerichtet von der Transportvorrichtung transportiert werden.

In diesem Zusammenhang ist es insbesondere denkbar und von Vorteil, dass die Transportspülmaschine eine Steuereinrichtung aufweist, welche ausgebildet ist, eine Fehler- oder Warnmeldung insbesondere an das der Transportspülmaschine zugeordnete Spülpersonal und/oder an den Betreiber der Transportspülmaschine auszugeben, wenn von der Auswerteeinrichtung ermittelt wird, dass zum Zeitpunkt der Bildaufnahme in dem Bereich der Transportvorrichtung:
- mindestens ein falsch orientiertes Spülgutteil von der Transportvorrichtung transportiert wird; und/oder
- eine vorab festgelegte oder festlegbare (Mindest-) Anzahl an falsch orientierten Spülgutteile von der Transportvorrichtung transportiert wird; und/oder
- mindestens ein falsch ausgerichtetes Spülgutteil von der Transportvorrichtung transportiert wird; und/oder
- eine vorab festgelegte oder festlegbare (Mindest-) Anzahl an falsch ausgerichteten Spülgutteile von der Transportvorrichtung transportiert wird.

Hierbei bietet es sich an, dass die Steuereinrichtung ausgebildet ist, regelnd auf die Transportspülmaschine und insbesondere auf die Transportvorrichtung der Transportspülmaschine einzuwirken und insbesondere die Transportvorrichtung der Transportspülmaschine anzuhalten und/oder die Transportrichtung der Transportvorrichtung zumindest zeitweilig umzukehren (um optional im Bedarfsfall (z.B. bei sehr großem Spülgut) die Transportvorrichtung ein Stück zurückzufahren), wenn von der Auswerteeinrichtung ermittelt wird, dass zum Zeitpunkt der Bildaufnahme in dem Bereich der Transportvorrichtung:
- mindestens ein falsch orientiertes Spülgutteil von der Transportvorrichtung transportiert wird; und/oder
- eine vorab festgelegte oder festlegbare (Mindest-) Anzahl an falsch orientierten Spülgutteilen von der Transportvorrichtung transportiert wird; und/oder
- mindestens ein falsch ausgerichtetes Spülgutteil von der Transportvorrichtung transportiert wird; und/oder
- eine vorab festgelegte oder festlegbare (Mindest-) Anzahl an falsch ausgerichteten Spülgutteilen von der Transportvorrichtung transportiert wird.

Denkbar insbesondere in diesem Zusammenhang ist es, dass die Steuereinrichtung ausgebildet ist, ein zusätzliches Waschsystem in der mindestens einen Waschzone und/oder ein zusätzliches Spülsystem in der mindestens einen Klarspülzone der Transportspülmaschine und/oder ein zusätzliches Trocknungssystem in einer optionalen Trocknungszone der Transportspülmaschine zu aktivieren oder zu deaktivieren und/oder eine pro Zeiteinheit in der mindestens einen Waschzone versprühte Menge an Waschflüssigkeit und/oder eine pro Zeiteinheit in der mindestens einen Klarspülzone versprühte Menge an Klarspülflüssigkeit zu variieren und/oder eine pro Zeiteinheit in einer optionalen Trocknungszone versprühte Menge an Trocknungsluft zu variieren, wenn von der Auswerteeinrichtung ermittelt wird, dass zum Zeitpunkt der Bildaufnahme in dem Bereich der Transportvorrichtung:
- mindestens ein falsch orientiertes Spülgutteil von der Transportvorrichtung transportiert wird; und/oder
- eine vorab festgelegte oder festlegbare (Mindest-) Anzahl an falsch orientierten Spülgutteilen von der Transportvorrichtung transportiert wird; und/oder
- mindestens ein falsch ausgerichtetes Spülgutteil von der Transportvorrichtung transportiert wird; und/oder
- eine vorab festgelegte oder festlegbare (Mindest-) Anzahl an falsch ausgerichteten Spülgutteilen von der Transportvorrichtung transportiert wird.

Bei der Auswertung des mindestens einen aufgenommenen Bilds werden zum Ermitteln der richtigen oder falschen Orientierung und/oder Ausrichtung der Spülgutteile insbesondere systematisch Algorithmen angewandt, um eine zugrundeliegende Beziehung zwischen Daten und Informationen mit Hilfe eines maschinellen Lern-Verfahrens zu synthetisieren. Das Merkmal des insbesondere überwachten maschinellen Lernens ist es, eine Funktion zu finden, die aus einer Trainingserfahrung verallgemeinert und eine Hypothese über ähnliche Daten ausgibt. Der entscheidende Unterschied, welcher maschinelles Lernen von einfacher Interpolation trennt, ist dieser Schritt der Verallgemeinerung.

So ist gemäß Realisierungen der vorliegenden Erfindung vorgesehen, dass die Auswerteeinrichtung ausgebildet ist, anhand von Trainingsdaten und insbesondere anhand von Trainingsbildern zu ermitteln, ob zum Zeitpunkt der Bildaufnahme in dem Bereich der Transportvorrichtung Spülgutteile vorhanden sind, die falsch orientiert von der Transportvorrichtung transportiert werden; und/oder die falsch ausgerichtet von der Transportvorrichtung transportiert werden.

Insbesondere ist es in diesem Zusammenhang denkbar, dass die Auswerteeinrichtung ausgebildet ist, durch einen Vergleich von zumindest Bereichen des mindestens einen aufgenommenen Bilds mit im Laufe einer Lernphase aufgenommenen Trainingsbildern zu ermitteln, ob zum Zeitpunkt der Bildaufnahme in dem Bereich der Transportvorrichtung Spülgutteile vorhanden sind, die falsch orientiert von der Transportvorrichtung transportiert werden; und/oder die falsch ausgerichtet von der Transportvorrichtung transportiert werden.

Gemäß einem weiteren Aspekt der vorliegenden Erfindung ist die Transportspülmaschine mit einer gewissen "Intelligenz" versehen, um insbesondere im Zuge des maschinellen Lernens Wissen im Hinblick auf die Ausrichtung/Orientierung der Spülgutteile aus Erfahrung künstlich zu generieren. Mit anderen Worten, gemäß dem weiteren Aspekt der Erfindung ist die erfindungsgemäße Transportspülmaschine ausgebildet, aus Beispielen zu lernen, und die Transportspülmaschine kann nach Beendigung der Lernphase diese gelernten Beispiele verallgemeinern. Dazu ist eine Steuereinrichtung der Transportspülmaschine ausgebildet, mit Hilfe von Algorithmen ein statistisches Modell aufzubauen, das auf Trainingsdaten beruht, und welches gegen Testdaten getestet werden kann.

Insbesondere ist gemäß Realisierungen des zuletzt genannten Aspekts der vorliegenden Erfindung vorgesehen, dass die Transportspülmaschine eine Steuereinrichtung aufweist, welche ausgebildet ist, insbesondere während einer Beobachtungsphase über einen Beobachtungszeitraum, der vorzugsweise eine Spülschicht oder einen Spültag der Transportspülmaschine betrifft, eine zeitliche Entwicklung der von der Auswerteeinrichtung ermittelten falsch orientierten und/oder falsch ausgerichteten Spülgutteile zu ermitteln und anhand der ermittelten zeitlichen Entwicklung vorzugsweise ein Muster oder eine Gesetzmäßigkeit abzuleiten.

Alternativ oder zusätzlich hierzu ist die Steuereinrichtung der Transportspülmaschine ausgebildet, insbesondere während einer Beobachtungsphase über einen Beobachtungszeitraum, der vorzugsweise eine Spülschicht oder einen Spültag der Transportspülmaschine betrifft, eine Statistik über die Art und/oder den Zeitpunkt der falsch orientierten und/oder falsch ausgerichteten Spülgutteile zu erstellen.

Bei dieser Ausgestaltung der erfindungsgemäßen Transportspülmaschine bietet es sich insbesondere an, dass die Steuereinrichtung ferner ausgebildet ist, in Abhängigkeit von der ermittelten zeitlichen Entwicklung und/oder in Abhängigkeit von der erstellten Statistik eine entsprechende Meldung zu generieren und/oder an insbesondere den Betreiber der Transportspülmaschine auszugeben, wobei die Meldung vorzugsweise eine Empfehlung für einen insbesondere im Hinblick auf die Reinigungseffizienz optimierten Betrieb der Transportspülmaschine enthält.

Zur Realisierung der erfindungsgemäßen Transportspülmaschine ist gemäß Ausführungsformen der Erfindung vorgesehen, dass die Bildverarbeitungseinrichtung insbesondere optionalen Vorverarbeitung des von dem Kamerasystem aufgenommenen mindestens einen Bilds, zur Segmentierung des insbesondere optional vorverarbeiteten Bilds und zur Merkmalsextraktion und Klassifizierung von in dem Bild enthaltenen Objekten ausgebildet ist.

In diesem Zusammenhang bietet es sich an, dass die Bildverarbeitungseinrichtung ferner ausgebildet ist, als Merkmal der in dem Bild enthaltenen Spülgutteile eine Position, Lage und/oder Ausrichtung der Spülgutteile in dem Bereich der Transportvorrichtung zu extrahieren. Die Bildverarbeitungseinrichtung ist vorzugsweise ferner ausgebildet, anhand der extrahierten Position, Lage und/oder Ausrichtung der Spülgutteile in dem Bereich der Transportvorrichtung diese zu klassifizieren, und zwar in:
a) eine erste Klasse, die Spülgutteile umfasst, deren Orientierung nicht einer vorab festgelegten oder festlegbaren Orientierung entspricht; und/oder
b) eine zweite Klasse, die Spülgutteile umfasst, deren Orientierung einer vorab festgelegten oder festlegbaren Orientierung entspricht; und/oder
c) eine dritte Klasse, die Spülgutteile umfasst, deren Ausrichtung nicht einer vorab festgelegten oder festlegbaren Orientierung entspricht; und/oder
d) eine vierte Klasse, die Spülgutteile umfasst, deren Ausrichtung einer vorab festgelegten oder festlegbaren Ausrichtung entspricht.

Gemäß Weiterbildungen dieser Ausführungsvariante der erfindungsgemäßen Transportspülmaschine ist vorgesehen, dass die Bildverarbeitungseinrichtung ferner ausgebildet ist, anhand der extrahierten Position, Lage und/oder Ausrichtung der Spülgutteile in dem Bereich der Transportvorrichtung diese zu klassifizieren, und zwar in:
e) eine fünfte Klasse, die Spülgutteile umfasst, deren Lage auf der Transportvorrichtung nicht einer vorab festgelegten oder festlegbaren Lage entspricht; und/oder
f) eine sechste Klasse, die Spülgutteile umfasst, deren Lage auf der Transportvorrichtung einer vorab festgelegten oder festlegbaren Lage entspricht.

Gemäß Realisierungen der zuletzt genannten Aspekte ist insbesondere vorgesehen, dass die Orientierung eines Spülgutteils der vorab festgelegten Orientierung entspricht, wenn das Spülgutteil insbesondere kopfüber von der Transportvorrichtung transportiert wird.

Alternativ oder zusätzlich ist es in diesem Zusammenhang denkbar, dass die Ausrichtung eines Spülgutteils der vorab festgelegten Ausrichtung entspricht, wenn das Spülgutteil kopfüber im Hinblick auf die Transportvorrichtung ausgerichtet ist. Selbstverständlich kommen hier aber auch andere Definitionen zur optimalen Orientierung und/oder Ausrichtung des Spülgutteils in Frage. In der Tat hängt die optimale Orientierung und Ausrichtung des entsprechenden Spülgutteils von dessen Größe und Formgebung ab.

Die der Erfindung zu Grunde liegende Aufgabe wird ferner durch ein Verfahren zum Betreiben einer Transportspülmaschine, insbesondere einer Transportspülmaschine der zuvor genannten erfindungsgemäßen Art oder einer Transportspülmaschine nach dem Oberbegriff von Anspruch 1 gelöst. Bei dem erfindungsgemäßen Verfahren ist vorgesehen, dass vorzugsweise bei einem Einlaufbereich der Transportspülmaschine und insbesondere innerhalb eines Einlauftunnels der Transportspülmaschine von oben oder unten oder seitlich mindestens ein Bild von einem Bereich einer Transportvorrichtung der Transportspülmaschine aufgenommen wird. Anschließend wird das mindestens eine Bild optional vorverarbeitet und das optional vorverarbeitete Bild wird mit Hilfe einer Bildverarbeitungseinrichtung segmentiert, um Merkmale von in dem Bild enthaltenen Objekte zu extrahieren und die Objekte zu klassifizieren. Schließlich wird anhand der durchgeführten Klassifizierung wird mit Hilfe einer Auswerteeinrichtung ermittelt, ob zum Zeitpunkt der Bildaufnahme in dem Bereich der Transportvorrichtung mindestens ein falsch orientiertes Spülgutteil von der Transportvorrichtung transportiert wird und/oder ob zum Zeitpunkt der Bildaufnahme in dem Bereich der Transportvorrichtung mindestens ein falsch ausgerichtetes Spülgutteil von der Transportvorrichtung transportiert wird.

Gemäß einer Weiterbildung des erfindungsgemäßen Verfahrens ist vorgesehen, dass eine Fehler- oder Warnmeldung insbesondere an das der Transportspülmaschine zugeordnete Spülpersonal und/oder an den Betreiber der Transportspülmaschine ausgegeben wird, wenn von der Auswerteeinrichtung ermittelt wird, dass zum Zeitpunkt der Bildaufnahme in dem Bereich der Transportvorrichtung:
- mindestens ein falsch orientiertes Spülgutteil von der Transportvorrichtung transportiert wird; und/oder
- eine vorab festgelegte oder festlegbare (Mindest-) Anzahl an falsch orientierten Spülgutteilen von der Transportvorrichtung transportiert wird; und/oder
- mindestens ein falsch ausgerichtetes Spülgutteil von der Transportvorrichtung transportiert wird; und/oder
- eine vorab festgelegte oder festlegbare (Mindest-) Anzahl an falsch ausgerichteten Spülgutteilen von der Transportvorrichtung transportiert wird.

Gemäß Weiterbildungen des erfindungsgemäßen Verfahrens deckt dieses den Aspekt des maschinellen Lernens ab. Insbesondere ist es in diesem Zusammenhang denkbar, dass insbesondere während einer Beobachtungsphase über einen Beobachtungszeitraum, der vorzugsweise eine Spülschicht oder einen Spültag der Transportspülmaschine betrifft, eine zeitliche Entwicklung der von der Auswerteeinrichtung ermittelten falsch orientierten und/oder falsch ausgerichteten Spülgutteile ermittelt und anhand der ermittelten zeitlichen Entwicklung vorzugsweise ein Muster oder eine Gesetzmäßigkeit abgeleitet wird.

Alternativ oder zusätzlich hierzu ist es denkbar, dass insbesondere während einer Beobachtungsphase über einen Beobachtungszeitraum, der vorzugsweise eine Spülschicht oder einen Spültag der Transportspülmaschine betrifft, eine Statistik über die Art und/oder den Zeitpunkt der falsch orientierten und/oder falsch ausgerichteten Spülgutteile, die mit der Transportvorrichtung transportiert werden, erstellt wird.

In einer Weiterbildung der zuletzt genannten denkbaren Realisierung des erfindungsgemäßen Betriebsverfahrens ist vorgesehen, dass in Abhängigkeit von der ermittelten zeitlichen Entwicklung und/oder in Abhängigkeit von der erstellten Statistik eine entsprechende Meldung generiert und/oder an insbesondere den Betreiber der Transportspülmaschine ausgegeben wird, wobei die Meldung vorzugsweise eine Empfehlung für einen insbesondere im Hinblick auf die Reinigungseffizienz optimierten Betrieb der Transportspülmaschine enthält.

Nachfolgend wird unter Bezugnahme auf die beiliegende Zeichnung eine exemplarische Ausführungsform der erfindungsgemäßen Transportspülmaschine näher beschrieben:
Es zeigt:

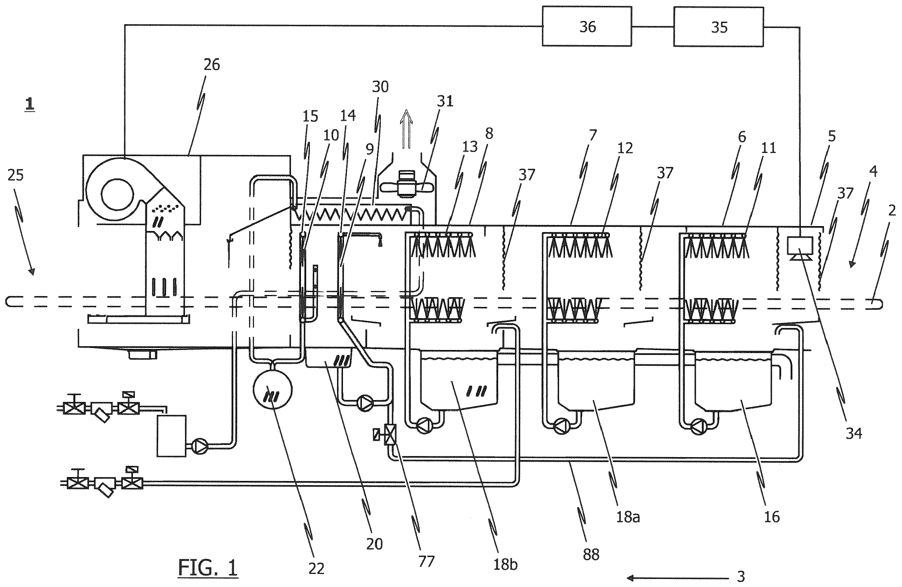

- FIG. 1: schematisch und in einer Längsschnittansicht eine Transportspülmaschine nach einer exemplarischen Ausführungsform der vorliegenden Erfindung.

FIG. 1 zeigt eine Transportspülmaschine 1 mit einer Transportvorrichtung 2 zum Transportieren von in den Zeichnungen nicht dargestelltem Spülgut in einer Transportrichtung 3 durch die Transportspülmaschine 1.

Als Transportvorrichtung 2 kommt beispielsweise ein Transportband in Frage, welches bevorzugt als mehrgliedriges Kunststofftransportband ausgebildet ist und durch einen in FIG. 1 nicht dargestellten vorzugsweise elektrischen Antrieb kontinuierlich angetrieben wird, so dass das auf das Transportband 2 aufgebrachte Spülgut durch die verschiedenen Behandlungszonen 6, 7, 8, 9, 10 und 26 der Transportspülmaschine 1 gemäß der Darstellung in FIG. 1 gefördert wird.

Üblicherweise wird das in Transportrichtung 3 transportierte Spülgut im Bereich des Einlaufes 4 auf die Transportvorrichtung bzw. das Transportband 2 aufgebracht. Entsprechend der durch den Pfeil angedeuteten Transportrichtung 3 wird dann das Spülgut vom Einlauf 4 in einen Einlauftunnel 5 transportiert.

Die Transportspülmaschine 1 gemäß der ersten Ausführungsform der vorliegenden Erfindung weist wenigstens eine Waschzone, beispielsweise wie in FIG. 1 dargestellt, eine Vorwaschzone 6, sowie eine erste Hauptwaschzone 7 und eine zweite Hauptwaschzone 8, welche in der Transportrichtung 3 gesehen nach der Vorwaschzone 6 angeordnet sind, auf.

In Transportrichtung 3 gesehen nach der wenigstens einen Waschzone 6, 7, 8 ist bei der in FIG. 1 dargestellten Transportspülmaschine 1 eine Nachwaschzone 9 und eine der Nachwaschzone 9 nachgeschaltete Klarspülzone 10 angeordnet.

In der Darstellung gemäß FIG. 1 ist die Transportvorrichtung 2 als umlaufendes Transportband dargestellt. Als Transportvorrichtung 2 sind allerdings auch Transportkörbe denkbar, in welchen das nicht explizit dargestellte Spülgut eingesetzt wird, und welche auf die Oberseite des Transportbandes aufgesetzt werden.

In Transportrichtung 3 gesehen läuft das entweder unmittelbar auf dem Transportband 2 aufgenommene Spülgut oder durch Körbe gehaltene Spülgut in der Transportrichtung 3 durch den Einlauftunnel 5, die sich daran anschließende Vorwaschzone 6, die erste Hauptwaschzone 7, die zweite Hauptwaschzone 8, die Nachwaschzone 9, die Klarspülzone 10, eine Trocknungszone 26 in eine Auslaufstrecke 25 ein.

Den genannten Behandlungszonen 6, 7, 8, 9 und 10 der Transportspülmaschine 1 sind jeweils Sprühdüsen 11, 12, 13, 14 und 15 zugeordnet, über welche Flüssigkeit auf das Spülgut gesprüht wird, das von der Transportvorrichtung 2 durch die jeweiligen Behandlungszonen 6, 7, 8, 9, und 10 transportiert wird. Jeder Behandlungszone 6, 7, 8, 9 und 10 ist ein Tank 16, 18, 20 und 22 zugeordnet, in welchem versprühte Flüssigkeit aufgenommen wird, und/oder in welchem Flüssigkeit für die Sprühdüsen der betreffenden Zonen bereitgestellt wird. Bei der in FIG. 1 dargestellten Transportspülmaschine 1 wird Klarspülflüssigkeit in Form von Frischwasser, welches rein oder mit weiteren Zusätzen, wie beispielsweise Klarspüler, versetzt sein kann, über die oberhalb und unterhalb des Transportbandes oder seitlich angeordnete Sprühdüsen 15 der Klarspülzone 10 auf das in den Zeichnungen nicht dargestellte Spülgut gesprüht.

Ein Teil der versprühten Klarspülflüssigkeit wird über ein Kaskadensystem entgegen der Transportrichtung 3 des Spülguts von Zone zu Zone transportiert. Der restliche Teil wird über ein Ventil 77 und eine Bypassleitung 88 direkt in den Vorwaschtank 16 geleitet.

Die versprühte Klarspülflüssigkeit wird in dem Tank 20 (Nachwaschtank 20) der Nachwaschzone 9 aufgefangen, von welchem sie über ein Pumpensystem zu den Sprühdüsen 14 (Nachwaschdüsen 14) der Nachwaschzone 9 gefördert wird. In der Nachwaschzone 9 wird Waschflüssigkeit von dem Spülgut abgespült. Die hierbei anfallende Flüssigkeit fließt in den Waschtank 18b der zweiten Hauptwaschzone 8, wird üblicherweise mit einem Reiniger versehen und durch ein Pumpensystem über die Düsen 13 (Waschdüsen 13) der zweiten Hauptwaschzone 8 auf das Spülgut gesprüht.

Von dem Waschtank 18b der zweiten Hauptwaschzone 8 fließt die Flüssigkeit in den Waschtank 18a der ersten Hauptwaschzone 7. Von dort aus wird die Flüssigkeit über ein weiteres Pumpensystem über die Waschdüsen 12 der ersten Hauptwaschzone 7 erneut auf das Spülgut gesprüht. Von dem Waschtank 18a der ersten Hauptwaschzone 7 fließt anschließend die Flüssigkeit in den Vorwaschtank 16 der Vorwaschzone 6. Die Flüssigkeit in dem Vorwaschtank 16 wird über ein Pumpensystem über die Vorwaschdüsen 11 der Vorwaschzone 6 auf das Spülgut gesprüht, um grobe Verunreinigungen von dem Spülgut zu entfernen.

Die einzelnen Spülsysteme der Behandlungszonen 6, 7, 8, 9 und 10 gewährleisten, dass das Spülgut sowohl von der Oberseite als auch der Unterseite abgespritzt wird.

Die jeweiligen Zonen 6, 7, 8, 9 und 10 der Transportspülmaschine 1 können über Trennvorhänge 37 voneinander getrennt sein. Bei der in FIG. 1 dargestellten Ausführungsform ist auch der Einlauftunnel 5 selber über einen Trennvorhang 37 von dem Einlauf 4 getrennt. Durch das Vorsehen der Trennvorhänge 37 wird ein Überspritzen von Waschflüssigkeit und Klarspülflüssigkeit und der Austritt von Wrasen aus der Transportspülmaschine verhindert.

An die Klarspülzone 10 schließt sich in Transportrichtung 3 des Spülguts die bereits erwähnte Trocknungszone 26 an. In der Trocknungszone 26 wird das Spülgut mit trockener und erwärmter Luft getrocknet, um die auf dem Spülgut befindliche Feuchtigkeit abzublasen bzw. abzutrocknen. Um den Feuchtigkeitsgehalt der Luft in einem für die Trocknung günstigen Bereich zu halten, ist es beispielsweise denkbar, über eine Öffnung, beispielsweise durch die Austrittsöffnung für das Spülgut, Raumluft zuzuführen. Die warme und angefeuchtete Luft wird beispielsweise mit Hilfe eines Gebläses 31 über eine weitere Öffnung aus der Trocknungszone 26 abgezogen.

Dabei ist vorteilhaft, dass der Abluftstrom aus der Trocknungszone 26 eine Einrichtung zur Wärmerückgewinnung 30 passiert, in welcher ein Kondensator vorgesehen sein kann. Die Einrichtung zur Wärmerückgewinnung 30 dient dazu, zumindest einen Teil der in der Abluft enthaltenen Wärmeenergie zurückzugewinnen.

Bei heutigen Band-/Korbtransportspülmaschinen wird das Spülgut durch mehrere Behandlungszonen, wie beispielsweise Vorwaschzonen, Hauptwaschzonen, Nachwaschzonen, Klarspülzonen und Trocknungszonen, befördert.

Wie bereits angedeutet, verlangen unterschiedliche Spülgutarten in den Behandlungszonen der Transportspülmaschine unterschiedliche Behandlungsparameter. Bei den derzeit bekannten Transportspülmaschinen erfolgt jedoch keine automatische Differenzierung der zu behandelnden Spülgutarten, so dass die herkömmlichen Systeme üblicherweise derart als Kompromiss ausgelegt werden, dass sie mehr oder weniger effizient für mehrere Spülgutarten verwendbar sind. Dieser Ansatz führt dazu, dass zur Behandlung des Spülguts in der Regel wesentlich mehr Ressourcen (Energie, Wasser, Chemie, etc.) eingesetzt werden, als dies tatsächlich notwendig wäre.

Die erfindungsgemäße Transportspülmaschine 1, wie sie beispielsweise in FIG. 1 dargestellt ist, ist dadurch gekennzeichnet, dass die Transportspülmaschine 1 ein Kamerasystem 34 aufweist, welches oberhalb der Transportvorrichtung 2 angeordnet und ausgebildet ist, vorzugsweise kontinuierlich oder zu vorab festgelegten oder festlegbaren Zeiten und/oder Ereignissen mindestens ein Bild von einem Bereich der Transportvorrichtung 2 aufzunehmen.

Dem Kamerasystem 34 ist eine Bildverarbeitungseinrichtung 35 zugeordnet, welche ausgebildet ist zur insbesondere optionalen Vorverarbeitung des von dem Kamerasystem 34 aufgenommenen mindestens einen Bilds, zur Segmentierung des insbesondere optional vorbearbeiteten Bilds und zur Merkmalsextraktion und Klassifizierung von in dem Bild enthaltenen Objekten (Spülgutteilen).

Insbesondere ist die Bildverarbeitungseinrichtung ausgebildet, eine Position, Lage und/oder Ausrichtung von in dem mindestens einen aufgenommenen Bild enthaltenen Spülgutteilen zu ermitteln.

Bei der erfindungsgemäßen Lösung kommt ferner eine Auswerteeinrichtung zum Einsatz, welche ausgebildet ist, anhand der ermittelten Position, Lage und/oder Ausrichtung der Spülgutteile auszuwerten und zu ermitteln, ob zum Zeitpunkt der Bildaufnahme in dem Bereich der Transportvorrichtung Spülgutteile vorhanden sind, die:
i) falsch orientiert von der Transportvorrichtung transportiert werden; und/oder
ii) falsch ausgerichtet von der Transportvorrichtung transportiert werden.

Hierbei ist zu berücksichtigen, dass jedes Spülgutteil eine optimale Orientierung aufweist, wenn das Spülgutteil mit der Transportvorrichtung 2 durch die Behandlungszonen der Transportspülmaschine 1 transportiert wird. Gleiches gilt für die Ausrichtung der Spülgutteile.

In der Regel sind beispielsweise Tassen, Becher und Töpfe derart orientiert und ausgerichtet, dass sie zumindest bereichsweise kopfüber mit der Transportvorrichtung 2 durch die einzelnen Behandlungszonen der Transportspülmaschine 1 transportiert werden. Hierbei ist zu berücksichtigen, dass die Sprüh- oder Luftdüsen der Behandlungszonen der Transportspülmaschine 1 in der Regel so ausgebildet sind, dass diese ein optimales Behandlungsergebnis erzielen, wenn das Spülgut in der vorgesehenen optimalen Ausrichtung oder Orientierung von der Transportvorrichtung 2 transportiert wird.

Flache Spülgutteile, wie beispielsweise Teller oder Tabletts, sind vorzugsweise leicht geneigt vertikal aufrechtstehend von der Transportvorrichtung 2 aufgenommen, da davon ausgegangen wird, dass solche Spülgutteile häufig nur relativ gering verschmutzt sind. Die nahezu vertikal ausgerichtete Aufstellung der Spülgutteile andererseits ermöglicht eine möglichst kompakte Beladung der Transportvorrichtung 2 und ist zusätzlich hilfreich, um nach der Behandlung die auf die Spülgutteile versprühte Flüssigkeit abtropfen zu lassen.

Die erfindungsgemäße Transportspülmaschine 1, die anhand einer exemplarischen Ausführungsform in FIG. 1 schematisch dargestellt ist, zeichnet sich insbesondere dadurch aus, dass die der Transportspülmaschine 1 zugehörige Steuereinrichtung 36 ausgebildet ist, eine entsprechende Fehler- oder Warnmeldung insbesondere an das der Transportspülmaschine 1 zugeordnete Spülpersonal und/oder an den Betreiber der Transportspülmaschine 1 auszugeben, wenn von der Auswerteeinrichtung ermittelt wird, dass zum Zeitpunkt der Bildaufnahme in dem Bereich der Transportvorrichtung 2:
- mindestens ein falsch orientiertes Spülgutteil von der Transportvorrichtung 2 transportiert wird; und/oder
- eine vorab festgelegte oder festlegbare (Mindest-) Anzahl an falsch orientierten Spülgutteilen von der Transportvorrichtung 2 transportiert wird; und/oder
- mindestens ein falsch ausgerichtetes Spülgutteil von der Transportvorrichtung 2 transportiert wird; und/oder
- eine vorab festgelegte oder festlegbare (Mindest-) Anzahl an falsch ausgerichteten Spülgutteilen von der Transportvorrichtung 2 transportiert wird.

Die Fehler- oder Warnmeldung ermöglicht es dem Spülpersonal, ggf. die falsche Orientierung oder Ausrichtung des betreffenden Spülgutteils zu korrigieren, oder die Transportvorrichtung 2 anzuhalten und/oder die Transportrichtung der Transportvorrichtung 2 zumindest zeitweilig umzukehren (um optional im Bedarfsfall (z.B. bei sehr großem Spülgut) die Transportvorrichtung ein Stück zurückzufahren), um eine entsprechende Korrektur vorzunehmen.

Andererseits kann die Fehler- oder Warnmeldung auch dazu dienen, dass das Spülpersonal möglicherweise das falsch orientierte oder falsch ausgerichtete Spülgutteil nach der Behandlung in den Behandlungszonen der Transportspülmaschine 1 nachkontrollieren und ggf. noch einmal reinigen muss.

Denkbar in diesem Zusammenhang ist es jedoch auch, dass die Steuereinrichtung 36 der Transportspülmaschine 1 ausgebildet ist, regelnd auf die Transportspülmaschine 1 und insbesondere auf die Transportvorrichtung 2 der Transportspülmaschine 1 einzuwirken und insbesondere die Transportvorrichtung 2 der Transportspülmaschine 1 anzuhalten und/oder die Transportrichtung der Transportvorrichtung 2 zumindest zeitweilig umzukehren, wenn von der Auswerteeinrichtung ermittelt wird, dass zum Zeitpunkt der Bildaufnahme in dem Bereich der Transportvorrichtung 2 mindestens ein falsch orientiertes Spülgutteil von der Transportvorrichtung 2 transportiert wird, und/oder eine vorab festgelegte oder festlegbare (Mindest-) Anzahl an falsch orientierten Spülgutteilen von der Transportvorrichtung 2 transportiert wird, und/oder mindestens ein falsch ausgerichtetes Spülgutteil von der Transportvorrichtung 2 transportiert wird, und/oder eine vorab festgelegte oder festlegbare (Mindest-) Anzahl an falsch ausgerichteten Spülgutteilen von der Transportvorrichtung 2 transportiert wird.

Alternativ oder zusätzlich zu diesem vorzugsweise automatischen Eingreifen, was die Transportgeschwindigkeit der Transportvorrichtung 2 angeht, ist es denkbar, dass die Steuereinrichtung 36 ein zusätzliches Waschsystem in der mindestens einen Waschzone und/oder ein zusätzliches Spülsystem in der mindestens einen Klarspülzone der Transportspülmaschine 1 und/oder ein zusätzliches Trocknungssystem in einer optionalen Trocknungszone der Transportspülmaschine 1 aktiviert bzw. deaktiviert und/oder eine pro Zeiteinheit in der mindestens einen Waschzone versprühte Menge an Waschflüssigkeit und/oder eine pro Zeiteinheit in der mindestens einen Klarspülzone versprühte Menge an Klarspülflüssigkeit variiert, wenn von der Auswerteeinrichtung ermittelt wird, dass zum Zeitpunkt der Bildaufnahme in dem Bereich der Transportvorrichtung 2 mindestens ein falsch orientiertes Spülgutteil von der Transportvorrichtung 2 transportiert wird, und/oder eine vorab festgelegte oder festlegbare (Mindest-) Anzahl an falsch orientierten Spülgutteilen von der Transportvorrichtung 2 transportiert wird, und/oder mindestens ein falsch ausgerichtetes Spülgutteil von der Transportvorrichtung 2 transportiert wird, und/oder eine vorab festgelegte oder festlegbare (Mindest-) Anzahl an falsch ausgerichteten Spülgutteilen von der Transportvorrichtung 2 transportiert wird.

Im übertragenen Sinne ist es selbstverständlich aber auch denkbar, dass entsprechende Maßnahmen in der mindestens einen Trocknungszone der Transportspülmaschine 1 initiiert werden, wie beispielsweise eine Erhöhung der pro Zeiteinheit auf das Spülgut geblasenen Trocknungsluft und/oder eine Erhöhung der Temperatur der Trocknungsluft, und/oder ein Zuschalten eines zusätzlichen Trocknungssystems.

Vorzugsweise ist die Steuereinrichtung 36 ausgebildet, im Rahmen des maschinellen Lernens entsprechende Muster oder Gesetzmäßigkeiten abzuleiten, welche den Trend bzw. die zeitliche Entwicklung der von der Auswerteeinrichtung ermittelten falsch orientierten und/oder falsch ausgerichteten Spülgutteile betrifft.

So ist es beispielsweise denkbar, dass die Steuereinrichtung 36 ausgebildet ist, insbesondere während einer Beobachtungsphase über einen Beobachtungszeitraum, der vorzugsweise eine Spülschicht oder einen Spültag der Transportspülmaschine 1 betrifft, eine zeitliche Entwicklung der von der Auswerteeinrichtung ermittelten falsch orientierten und/oder falsch ausgerichteten Spülgutteile zu ermitteln und anhand der ermittelten zeitlichen Entwicklung vorzugsweise ein Muster oder eine Gesetzmäßigkeit abzuleiten.

Alternativ oder zusätzlich hierzu ist es denkbar, dass die Steuereinrichtung 36 ausgebildet ist, insbesondere während einer Beobachtungsphase über einen Beobachtungszeitraum, der vorzugsweise eine Spülschicht oder einen Spültag der Transportspülmaschine 1 betrifft, eine Statistik über die Art und/oder den Zeitpunkt der falsch orientierten und/oder falsch ausgerichteten Spülgutteile zu erstellen.

In Abhängigkeit von der ermittelten zeitlichen Entwicklung bzw. in Abhängigkeit von der erstellten Statistik kann eine entsprechende Meldung generiert und insbesondere an den Betreiber der Transportspülmaschine 1 ausgegeben werden, wobei die Meldung vorzugsweise eine Empfehlung für einen insbesondere im Hinblick auf die Reinigungseffizienz optimierten Betrieb der Transportspülmaschine 1 enthält.

Die Erfindung betrifft ferner ein Verfahren zum Betreiben einer Transportspülmaschine 1, insbesondere einer Transportspülmaschine 1, wie sie beispielsweise schematisch in FIG. 1 gezeigt ist.

Bei dem Verfahren wird vorzugsweise bei einem Einlaufbereich der Transportspülmaschine 1 und insbesondere innerhalb eines Einlauftunnels der Transportspülmaschine 1 von oben oder unten oder seitlich mindestens ein Bild von einem Bereich einer Transportvorrichtung 2 der Transportspülmaschine 1 aufgenommen. Das mindestens eine Bild wird optional vorverarbeitet und das optional vorverarbeitete Bild wird mit Hilfe einer Bildverarbeitungseinrichtung segmentiert, um Merkmale von in dem Bild enthaltenen Objekte zu extrahieren und die Objekte zu klassifizieren.

Anhand der durchgeführten Klassifizierung wird mit Hilfe einer Auswerteeinrichtung ermittelt, ob zum Zeitpunkt der Bildaufnahme in dem Bereich der Transportvorrichtung 2 mindestens ein falsch orientiertes Spülgutteil von der Transportvorrichtung 2 transportiert wird bzw. ob zum Zeitpunkt der Bildaufnahme in dem Bereich der Transportvorrichtung 2 mindestens ein falsch ausgerichtetes Spülgutteil von der Transportvorrichtung 2 transportiert wird.

Anschließend kann eine entsprechende Fehler- oder Warnmeldung insbesondere an das der Transportspülmaschine 1 zugeordnete Personal oder an den Betreiber der Transportspülmaschine 1 ausgegeben werden.

Die Erfindung ist nicht auf die in FIG. 1 schematisch gezeigte Ausführungsform der Transportspülmaschine 1 beschränkt, sondern ergibt sich aus einer Zusammenschau sämtlicher hierin offenbarter Merkmale.

## Patentansprüche

1. Transportspülmaschine (1) zum Reinigen von Spülgut, wobei die Transportspülmaschine (1) mindestens eine Waschzone (6, 7, 8, 9) und mindestens eine Klarspülzone (10) sowie eine Transportvorrichtung (2) aufweist zum Transportieren von Spülgut durch die mindestens eine Waschzone (6, 7, 8, 9) und die mindestens eine Klarspülzone (10),
**dadurch gekennzeichnet, dass**
die Transportspülmaschine (1) ein Kamerasystem (34) aufweist, welches ober- oder unterhalb der oder seitlich zur Transportvorrichtung (2) angeordnet und ausgebildet ist, vorzugsweise kontinuierlich oder zu vorab festgelegten oder festlegbaren Zeiten und/oder Ereignissen mindestens ein Bild von einem Bereich der Transportvorrichtung (2) aufzunehmen, wobei dem Kamerasystem (34) eine Bildverarbeitungseinrichtung (35) zugeordnet ist, welche ausgebildet ist, eine Position, Lage und/oder Ausrichtung von in dem mindestens einen aufgenommenen Bild enthaltenen Spülgutteilen zu ermitteln, wobei ferner eine Auswerteeinrichtung vorgesehen ist, welche ausgebildet ist, anhand der ermittelten Position, Lage und/oder Ausrichtung der Spülgutteile auszuwerten und zu ermitteln, ob zum Zeitpunkt der Bildaufnahme in dem Bereich der Transportvorrichtung (2) Spülgutteile vorhanden sind, die:
i) falsch orientiert von der Transportvorrichtung (2) transportiert werden; und/oder
ii) falsch ausgerichtet von der Transportvorrichtung (2) transportiert werden.

2. Transportspülmaschine (1) nach Anspruch 1,
wobei die Auswerteeinrichtung ausgebildet ist, anhand von Trainingsdaten und insbesondere anhand von Trainingsbildern zu ermitteln, ob zum Zeitpunkt der Bildaufnahme in dem Bereich der Transportvorrichtung (2) Spülgutteile vorhanden sind, die falsch orientiert von der Transportvorrichtung (2) transportiert werden; und/oder die falsch ausgerichtet von der Transportvorrichtung (2) transportiert werden.

3. Transportspülmaschine (1) nach Anspruch 1 oder 2,
wobei die Auswerteeinrichtung ausgebildet ist, durch einen Vergleich von zumindest Bereichen des mindestens einen aufgenommenen Bilds mit im Laufe einer Lernphase aufgenommenen Trainingsbildern zu ermitteln, ob zum Zeitpunkt der Bildaufnahme in dem Bereich der Transportvorrichtung (2) Spülgutteile vorhanden sind, die falsch orientiert von der Transportvorrichtung (2) transportiert werden; und/oder die falsch ausgerichtet von der Transportvorrichtung (2) transportiert werden.

4. Transportspülmaschine (1) nach einem der Ansprüche 1 bis 3,
wobei die Transportspülmaschine (1) eine Steuereinrichtung (36) aufweist, welche ausgebildet ist, eine Fehler- oder Warnmeldung insbesondere an das der Transportspülmaschine (1) zugeordnete Spülpersonal und/oder an den Betreiber der Transportspülmaschine (1) auszugeben, wenn von der Auswerteeinrichtung ermittelt wird, dass zum Zeitpunkt der Bildaufnahme in dem Bereich der Transportvorrichtung (2):
- mindestens ein falsch orientiertes Spülgutteil von der Transportvorrichtung (2) transportiert wird; und/oder
- eine vorab festgelegte oder festlegbare (Mindest-) Anzahl an falsch orientierten Spülgutteilen von der Transportvorrichtung (2) transportiert wird; und/oder
- mindestens ein falsch ausgerichtetes Spülgutteil von der Transportvorrichtung (2) transportiert wird; und/oder
- eine vorab festgelegte oder festlegbare (Mindest-) Anzahl an falsch ausgerichteten Spülgutteilen von der Transportvorrichtung (2) transportiert wird.

5. Transportspülmaschine (1) nach einem der Ansprüche 1 bis 4,
wobei die Transportspülmaschine (1) eine Steuereinrichtung (36) aufweist, welche ausgebildet ist, regelnd auf die Transportspülmaschine (1) und insbesondere auf die Transportvorrichtung (2) der Transportspülmaschine (1) einzuwirken und insbesondere die Transportvorrichtung (2) der Transportspülmaschine (1) anzuhalten und/oder die Transportrichtung der Transportvorrichtung (2) zumindest zeitweilig umzukehren, wenn von der Auswerteeinrichtung ermittelt wird, dass zum Zeitpunkt der Bildaufnahme in dem Bereich der Transportvorrichtung (2):
- mindestens ein falsch orientiertes Spülgutteil von der Transportvorrichtung (2) transportiert wird; und/oder
- eine vorab festgelegte oder festlegbare (Mindest-) Anzahl an falsch orientierten Spülgutteilen von der Transportvorrichtung (2) transportiert wird; und/oder
- mindestens ein falsch ausgerichtetes Spülgutteil von der Transportvorrichtung (2) transportiert wird; und/oder
- eine vorab festgelegte oder festlegbare (Mindest-) Anzahl an falsch ausgerichteten Spülgutteilen von der Transportvorrichtung (2) transportiert wird.

6. Transportspülmaschine (1) nach einem der Ansprüche 1 bis 5,
wobei die Transportspülmaschine (1) eine Steuereinrichtung (36) aufweist, welche ausgebildet ist, ein zusätzliches Waschsystem in der mindestens einen Waschzone (6, 7, 8, 9) und/oder ein zusätzliches Spülsystem in der mindestens einen Klarspülzone (10) und/oder ein zusätzliches Trocknungssystem in einer optionalen Trocknungszone der Transportspülmaschine (1) zu aktivieren oder zu deaktivieren und/oder eine pro Zeiteinheit in der mindestens einen Waschzone (6, 7, 8, 9) versprühte Menge an Waschflüssigkeit und/oder eine pro Zeiteinheit in der mindestens einen Klarspülzone (10) versprühte Menge an Klarspülflüssigkeit zu variieren und/oder eine pro Zeiteinheit in der optionalen Trocknungszone versprühte Menge an Trocknungsluft zu variieren, wenn von der Auswerteeinrichtung ermittelt wird, dass zum Zeitpunkt der Bildaufnahme in dem Bereich der Transportvorrichtung (2):
- mindestens ein falsch orientiertes Spülgutteil von der Transportvorrichtung (2) transportiert wird; und/oder
- eine vorab festgelegte oder festlegbare (Mindest-) Anzahl an falsch orientierten Spülgutteilen von der Transportvorrichtung (2) transportiert wird; und/oder
- mindestens ein falsch ausgerichtetes Spülgutteil von der Transportvorrichtung (2) transportiert wird; und/oder
- eine vorab festgelegte oder festlegbare (Mindest-) Anzahl an falsch ausgerichteten Spülgutteilen von der Transportvorrichtung (2) transportiert wird.

7. Transportspülmaschine (1) nach einem der Ansprüche 1 bis 6,
wobei die Transportspülmaschine (1) eine Steuereinrichtung (36) aufweist, welche ausgebildet ist:
- insbesondere während einer Beobachtungsphase über einen Beobachtungszeitraum, der vorzugsweise eine Spülschicht oder einen Spültag der Transportspülmaschine (1) betrifft, eine zeitliche Entwicklung der von der Auswerteeinrichtung ermittelten falsch orientierten und/oder falsch ausgerichteten Spülgutteile zu ermitteln und anhand der ermittelten zeitlichen Entwicklung vorzugsweise ein Muster oder eine Gesetzmäßigkeit abzuleiten; und/oder
- insbesondere während einer Beobachtungsphase über einen Beobachtungszeitraum, der vorzugsweise eine Spülschicht oder einen Spültag der Transportspülmaschine (1) betrifft, eine Statistik über die Art und/oder den Zeitpunkt der falsch orientierten und/oder falsch ausgerichteten Spülgutteile zu erstellen.

8. Transportspülmaschine (1) nach Anspruch 7,
wobei die Steuereinrichtung (36) ferner ausgebildet ist, in Abhängigkeit von der ermittelten zeitlichen Entwicklung und/oder in Abhängigkeit von der erstellten Statistik eine entsprechende Meldung zu generieren und/oder an insbesondere den Betreiber der Transportspülmaschine (1) auszugeben, wobei die Meldung vorzugsweise eine Empfehlung für einen insbesondere im Hinblick auf die Reinigungseffizienz optimierten Betrieb der Transportspülmaschine (1) enthält.

9. Transportspülmaschine (1) nach einem der Ansprüche 1 bis 8,
wobei die Bildverarbeitungseinrichtung (35) zur insbesondere optionalen Vorverarbeitung des von dem Kamerasystem (34) aufgenommenen mindestens einen Bilds, zur Segmentierung des insbesondere optional vorverarbeiteten Bilds und zur Merkmalsextraktion und Klassifizierung von in dem Bild enthaltenen Objekten ausgebildet ist, wobei die Bildverarbeitungseinrichtung (35) ferner ausgebildet ist, als Merkmal der in dem Bild enthaltenen Spülgutteile eine Position, Lage und/oder Ausrichtung der Spülgutteile in dem Bereich der Transportvorrichtung (2) zu extrahieren, und wobei die Bildverarbeitungseinrichtung (35) ferner ausgebildet ist, anhand der extrahierten Position, Lage und/oder Ausrichtung der Spülgutteile in dem Bereich der Transportvorrichtung (2) diese zu klassifizieren, und zwar in:
a) eine erste Klasse, die Spülgutteile umfasst, deren Orientierung nicht einer vorab festgelegten oder festlegbaren Orientierung entspricht; und/oder
b) eine zweite Klasse, die Spülgutteile umfasst, deren Orientierung einer vorab festgelegten oder festlegbaren Orientierung entspricht; und/oder
c) eine dritte Klasse, die Spülgutteile umfasst, deren Ausrichtung nicht einer vorab festgelegten oder festlegbaren Ausrichtung entspricht; und/oder
d) eine vierte Klasse, die Spülgutteile umfasst, deren Ausrichtung einer vorab festgelegten oder festlegbaren Ausrichtung entspricht.

10. Transportspülmaschine (1) nach Anspruch 9,
wobei die Bildverarbeitungseinrichtung (35) ferner ausgebildet ist, anhand der extrahierten Position, Lage und/oder Ausrichtung der Spülgutteile in dem Bereich der Transportvorrichtung (2) diese zu klassifizieren, und zwar in:
e) eine fünfte Klasse, die Spülgutteile umfasst, deren Lage auf der Transportvorrichtung (2) nicht einer vorab festgelegten oder festlegbaren Lage entspricht; und/oder
f) eine sechste Klasse, die Spülgutteile umfasst, deren Lage auf der Transportvorrichtung (2) einer vorab festgelegten oder festlegbaren Lage entspricht.

11. Transportspülmaschine (1) nach einem der Ansprüche 1 bis 10,
wobei die Orientierung eines Spülgutteils der vorab festgelegten Orientierung entspricht, wenn das Spülgutteil kopfüber von der Transportvorrichtung (2) transportiert wird; und/oder wobei die Ausrichtung eines Spülgutteils der vorab festgelegten Ausrichtung entspricht, wenn das Spülgutteil kopfüber im Hinblick auf die Transportvorrichtung (2) ausgerichtet ist.

12. Verfahren zum Betreiben einer Transportspülmaschine (1), insbesondere einer Transportspülmaschine (1) nach einem der Ansprüche 1 bis 11 oder einer Transportspülmaschine (1) nach dem Oberbegriff von Anspruch 1,
wobei das Verfahren die folgenden Verfahrensschritte aufweist:
- es wird vorzugsweise bei einem Einlaufbereich der Transportspülmaschine (1) und insbesondere innerhalb eines Einlauftunnels der Transportspülmaschine (1) von oben oder unten oder seitlich mindestens ein Bild von einem Bereich einer Transportvorrichtung (2) der Transportspülmaschine (1) aufgenommen;
- das mindestens eine Bild wird optional vorverarbeitet und das optional vorverarbeitete Bild wird mit Hilfe einer Bildverarbeitungseinrichtung (35) segmentiert, um Merkmale von in dem Bild enthaltenen Objekte zu extrahieren und die Objekte zu klassifizieren; und
- anhand der durchgeführten Klassifizierung wird mit Hilfe einer Auswerteeinrichtung ermittelt, ob zum Zeitpunkt der Bildaufnahme in dem Bereich der Transportvorrichtung (2) mindestens ein falsch orientiertes Spülgutteil von der Transportvorrichtung (2) transportiert wird, und/oder ob zum Zeitpunkt der Bildaufnahme in dem Bereich der Transportvorrichtung (2) mindestens ein falsch ausgerichtetes Spülgutteil von der Transportvorrichtung (2) transportiert wird.

13. Verfahren nach Anspruch 12,
wobei eine Fehler- oder Warnmeldung insbesondere an das der Transportspülmaschine (1) zugeordnete Spülpersonal und/oder an den Betreiber der Transportspülmaschine (1) ausgegeben wird, wenn von der Auswerteeinrichtung ermittelt wird, dass zum Zeitpunkt der Bildaufnahme in dem Bereich der Transportvorrichtung (2):
- mindestens ein falsch orientiertes Spülgutteil von der Transportvorrichtung (2) transportiert wird; und/oder
- eine vorab festgelegte oder festlegbare (Mindest-) Anzahl an falsch orientierten Spülgutteilen von der Transportvorrichtung (2) transportiert wird; und/oder
- mindestens ein falsch ausgerichtetes Spülgutteil von der Transportvorrichtung (2) transportiert wird; und/oder
- eine vorab festgelegte oder festlegbare (Mindest-) Anzahl an falsch ausgerichteten Spülgutteilen von der Transportvorrichtung (2) transportiert wird.

14. Verfahren nach Anspruch 12 oder 13,
wobei das Verfahren ferner folgende Verfahrensschritte aufweist:
- insbesondere während einer Beobachtungsphase wird über einen Beobachtungszeitraum, der vorzugsweise eine Spülschicht oder einen Spültag der Transportspülmaschine (1) betrifft, eine zeitliche Entwicklung der von der Auswerteeinrichtung ermittelten falsch orientierten und/oder falsch ausgerichteten Spülgutteile ermittelt und anhand der ermittelten zeitlichen Entwicklung wird vorzugsweise ein Muster oder eine Gesetzmäßigkeit abgeleitet; und/oder
- insbesondere während einer Beobachtungsphase über einen Beobachtungszeitraum, der vorzugsweise eine Spülschicht oder einen Spültag der Transportspülmaschine (1) betrifft, wird eine Statistik über die Art und/oder den Zeitpunkt der falsch orientierten und/oder falsch ausgerichteten Spülgutteile, die mit der Transportvorrichtung (2) transportiert werden, erstellt.

15. Verfahren nach Anspruch 14,
wobei in Abhängigkeit von der ermittelten zeitlichen Entwicklung und/oder in Abhängigkeit von der erstellten Statistik eine entsprechende Meldung generiert und/oder an insbesondere den Betreiber der Transportspülmaschine (1) ausgegeben wird, wobei die Meldung vorzugsweise eine Empfehlung für einen insbesondere im Hinblick auf die Reinigungseffizienz optimierten Betrieb der Transportspülmaschine (1) enthält.
